# EUROPEAN PATENT APPLICATION

(11) **EP 2 079 017 A1**
(43) Date of publication of application: **15.07.2009**
(21) Application number: 06822393.2
(22) Date of filing: 26.10.2006
(51) Int. Cl.: G06F 9/445

(54) **APPLICATION MANAGEMENT DEVICE AND APPLICATION MANAGEMENT METHOD**

(71) Applicant: Panasonic Corporation, Kadoma-shi Osaka 571-8501 (JP)
(72) Inventor: ANZAI, Jun, Yokohama-shi, Kanagawa 224-8539 (JP)
(74) Representative: Grünecker, Kinkeldey, Stockmair & Schwanhäusser Anwaltssozietät
(86) International application number: PCT/JP2006/321424
(87) International publication number: WO 2008/050439

(57) **Abstract**

An application management device can collectively manage and receive providing service as to applications on different platforms in a mobile terminal device equipped with an IC card, such as a card application used for the same service, a native application, and "Java" (registered trademark) application. This application management device (400) is applied to a mobile terminal device (100) to manage a plurality of applications used for service by means of an IC function of an IC card (200) set at the mobile terminal device (100). A table memory unit (406) stores a plurality of applications comprised of a card application of the card (200), a native application dependent on an inherent platform in the mobile terminal device (100) and a non-native application in association with a plurality of application names indicative of a plurality of the applications and a service ID indicative of service carried out in cooperation with a plurality of applications. An integrated application control unit (408) manages a plurality of applications used for each service shown by the service ID by means of the stored service ID and the plurality of the application names in association with the service ID.

## Description

### Technical Field

The present invention relates to an application management apparatus and an application management method for managing applications on a portable terminal with IC functions by mounting an IC card, and a contactless IC card, in particular.

### Background Art

In recent years, magnetic cards such as credit cards and prepaid cards are being replaced by IC (Integrated Circuit) cards that incorporate electronic money and that provide a plurality of services with a single card in order to a large amount of information and provide card services requiring safely and reliability.

IC cards incorporate an IC chip such as a CPU and IC memory, provide a high level of security, have an arithmetic processing function and can execute processing such as comparison and judgment within the cards. This allows more sophisticated methods of use than magnetic cards to be conceived and new services are being developed in a variety of business fields such as means of transportation, business transactions and security.

IC cards can be roughly classified into a "contact type" in which metal terminals of an IC chip are exposed on the card surface and a "contactless" which carries out communication using electromagnetic waves. Furthermore, an IC function generally mounted on a mobile phone supports both contact and contactless interfaces. Furthermore, contactless IC cards can be classified into the "close coupling type," "proximity type," "vicinity type" and "microwave type," depending on the distance of communication between the IC card and a reader/writer capable of reading/writing data from/into the IC card.

With such an IC card being mounted on a mobile phone, one application service (hereinafter "service") is executed by making an application in the IC card and an application in the mobile phone to cooperate.

For example, a mobile phone mounted with a contactless IC card and supporting an IC function and Java (trademark), executes a service by cooperation between a card application incorporated in the IC card, a native application of the telephone, and the Java (trademark) application of the telephone.

In order to execute such a service, there are techniques known for managing cooperation between an application in an IC card mounted on a portable terminal and an application of the portable terminal and establishing associations between these applications, as shown in Patent Document 1 and Patent Document 2.

Patent Document 1 describes a portable terminal mounted with an IC card in which a card application of the IC card causes a server connected via a communication network to authenticate an application of the portable terminal ("native application") to manage cooperation between the application of the portable terminal and the card application. On the other hand, Patent Document 2 describes that an IC card having a multi application function is managed by a server connected so as to be able to communicate therewith.
Patent Document 1: Japanese Patent Application Laid-Open No.2004-94499
Patent Document 2: Japanese Patent Application Laid-Open No.2003-6574

### Disclosure of Invention

### Problems to be Solved by the Invention

However, in the portable terminal mounted with the IC card according to Patent Documents 1 and 2 alike, applications on different platforms such as card application, native application and Java (trademark) application used for the same service, are managed individually by the user, which takes a lot of time and effort.

For this reason, even in the case of a plurality of applications on different platforms such as a card application of an IC card, native application and non-native application such as Java (trademark) of a portable terminal used for the same service, there is a demand for simplifying the management of these applications.

It is therefore an object of the present invention to provide an application management apparatus and an application management method for a portable terminal mounted with an IC card, capable of collectively managing also applications on different platforms such as a card application, native application and non-native application on the terminal side used for the same service and receiving the service.

### Means for Solving the Problem

The application management apparatus of the present invention is an application management apparatus that manages a plurality of applications used for a service using an IC function of an IC card mounted and adopts a configuration including a storage section that stores a plurality of pieces of application identification information indicating the plurality of applications respectively in association with a service ID indicating the service executed by cooperation between the plurality of applications and a management section that manages the plurality of applications used for each service indicated by the service ID using the stored service ID and the plurality of pieces of application identification information associated with the service ID.

### Advantageous Effect of the Invention

As explained above, on a portable terminal mounted with an IC card, the present invention provides an advantage of collectively managing also applications on different platforms such as a card application, native application and non-native application on the terminal side used for the same service, executing the service, and thereby receiving the service.

### Brief Description of Drawings

FIG. 1 is a block diagram showing an overall physical configuration of a portable terminal having an application management apparatus according to an embodiment of the present invention;
FIG.2 is a software configuration diagram of the portable terminal according to the embodiment of the present invention;
FIG.3 is a functional block diagram showing an application management apparatus that realizes an integrated application manager in the portable terminal;
FIG.4 shows an example of a table stored in a table storage section;
FIG. 5 shows a list of services displayed on a display section as an example of a user interface by the integrated application control section;
FIG.6 is a flowchart illustrating the operation of adding a service to provide, in the application management apparatus according to the present invention; and
FIG.7 is a flowchart illustrating the operation of removing a service to provide, in the application management apparatus according to the present invention.

### Best Mode for Carrying Out the Invention

Hereinafter, an embodiment of the present invention will be explained in detail with reference to the accompanying drawings.

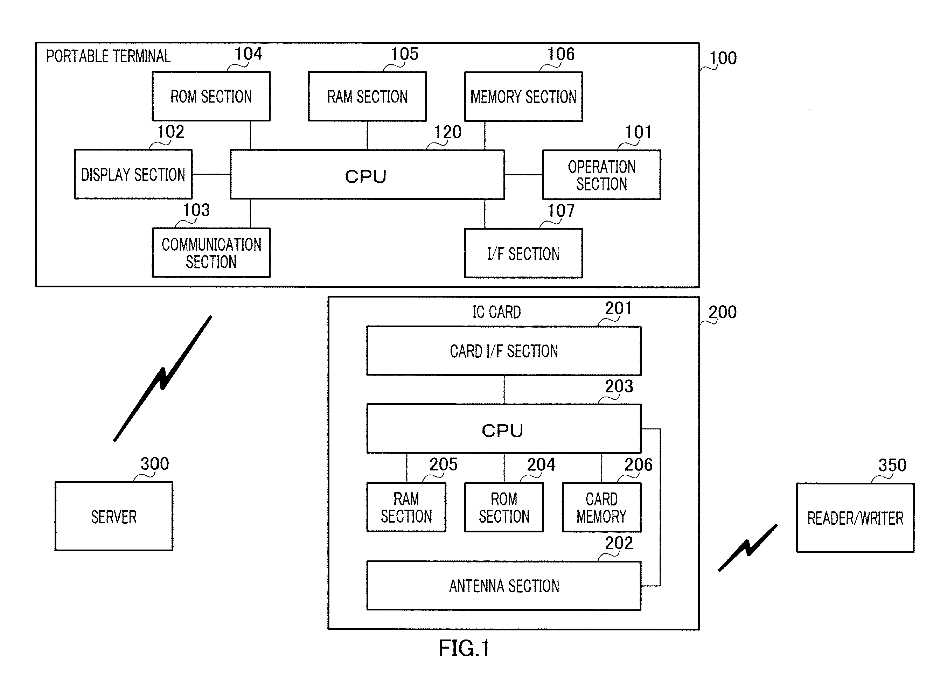

FIG.1 is a block diagram showing an overall physical configuration of portable terminal 100 having an application management apparatus according to an embodiment of the present invention.

Portable terminal 100 is a portable terminal (e.g., mobile phone) with an IC function mounted with an IC card, and a contactless IC card in particular, and collectively manages a card application stored in the IC card and an application in the terminal used for the same service.

Applications on portable terminal 100 include a native application that is dependent on a platform specific to the portable terminal and a non-dependent application (non-native application) that does not depend on the platform specific to the portable terminal. "Platform" is a concept to cover the hardware configuration and the architecture defined by software configurations such as the operating system (OS).

Portable terminal 100 shown in FIG.1 is mounted with an IC card (here, contactless IC card 200) and is able to give and receive a supply of an application service executed between a card application of mounted contactless IC card (also referred to as "IC card" for convenience) 200 and an application of the terminal itself. IC card 200 referred to in the present embodiment is not limited to one that has the form of a card, but means a component mounted on a portable terminal and having a contactless IC function similar to that of a contactless IC card. That is, IC card 200 may also be IC chip 200.

Portable terminal 100 is provided with operation section 101 such as the operation buttons disposed in the area exposed outside the casing, display section 102, communication section 103, CPU 120, ROM section 104, RAM section 105, memory section 106 and I/F section 107.

Operation section 101, display section 102, communication section 103, ROM section 104, RAM section 105, memory section 106 and I/F section 107 are connected to CPU 120.

Operation section 101 allows the user to give commands about a service such as deletion, addition (storage) and update or the like of the service using information about the service displayed on display section 102 or command selection of a plurality of applications to be used for a service to be set when the service is independently set or the like. This operation section 101 functions as a selection section and a command section.

Display section 102 is made up of a liquid crystal display panel or the like and displays information about a service provided to portable terminal 100.

Communication section 103 transmits/receives data through radio communication to/from an external apparatus (here, server 300) such as a base station or server via, for example, a communication network. ROM section 104 stores the control program intrinsic to the mobile phone and RAM section 105 temporarily stores and operates information including received data.

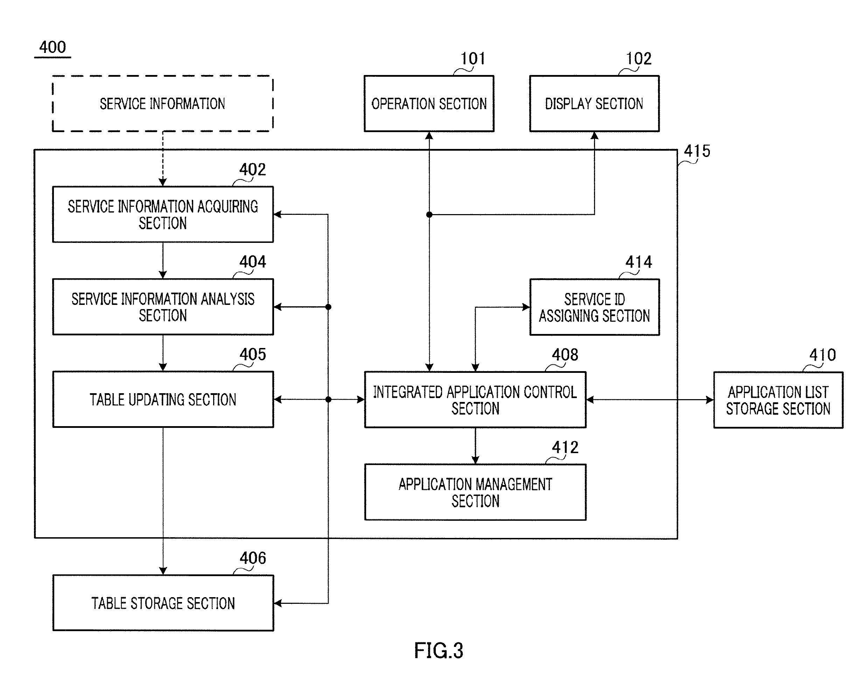

Furthermore, memory section 106 stores received data or information, and records or stores an application program that receives and processes a plurality of applications in the present embodiment in particular. The application program stored in this memory section 106 (also referred to as "application") is managed by application management section 412 (see FIG.3), which will be described later.

This application program is tagged with an application search key, receives a start command for a startup program transmitted from contactless IC card 200, compares the start command with an application key and starts the application program. The application program may also be stored in RAM section 105.

CPU 120 functions as a terminal control section that governs the overall control of the portable terminal together with ROM section 104 and RAM section 105, and also functions as an application integrated management control section of the application management apparatus that performs integrated management on applications used in the service provided to portable terminal 100. Though not shown, portable terminal 100 has a speech processing section that controls a receiver and a transmitter.

Contactless IC card 200 incorporates an IC chip such as an RFID (Radio Frequency Identification). Contactless IC card 200 includes card I/F section 201, antenna section 202, which is an antenna for contactless communication, CPU 203, ROM section 204, RAM section 205 and card memory 206.

Card I/F section 201, antenna section 202, ROM section 204, RAM section 205 and card memory 206 are connected to CPU 203 which is a control section of contactless IC card 200.

When connected to I/F section 107, card I/F section 201 connects IC card 200 to the body of the portable terminal. Antenna section 202 transmits/receives information to/from reader/writer 350 through contactless communication. Via this antenna section 202, IC card 200 acquires information such as service information from reader/writer 350 or transmits information to reader/writer 350.

ROM section 204 stores a startup program used in CPU 203 and other programs for controlling data, and RAM section 205 temporarily stores and operates received information including received data. Card memory 206 stores the startup program of the application program and other data including the cross authentication key.

Furthermore, IC card 200 may also be configured so as to be able to freely set card memory 206 as a secure field. In this case, the capacity available as this secure field can be freely set within the range of the capacity of card memory 206.

By internally managing and encrypting keys, IC card 200 realizes a high degree of confidentiality and at the same time realizes high-speed data transfer upon reading/writing, and can provide functions suitable to applications such as protection of confidential information.

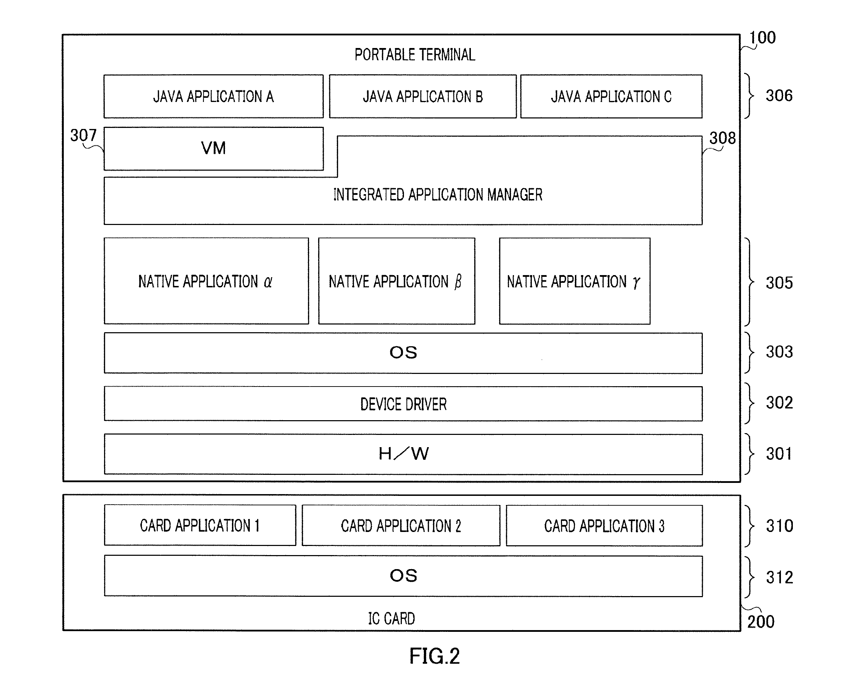

FIG.2 is a software configuration diagram of portable terminal 100 according to the embodiment of the present invention.

As shown in FIG.2, portable terminal 100 includes H/W 301, device driver 302, OS 303, native applications 305, non-dependent applications 306 (here, Java (trademark) applications), VM (Virtual Manager) 307 and integrated application manager 308.

H/W 301 shown in FIG.2 corresponds to the hardware in FIG.1. Device driver 302 controls the processing sections of H/W 301 such as CPU 120 and memory section 106. OS 303 provides operation environments for native application 305, non-dependent applications 306, VM 307 and card applications 310, which are applications of respective platforms, and executes a program. Furthermore, OS 312 is the card OS for contactless IC card 200. As shown in FIG.2, contactless IC card 200 is provided with card applications 1, 2 and 3 and is a multi-application card.

Integrated application manager 308 shown in FIG. 2 is executed by the application management apparatus. Integrated application manager 308 performs integrated management of non-dependent applications 306, native applications 305 and card applications 310, which are applications of different platforms, on portable terminal 100 mounted with contactless IC card 200.

FIG.3 is a functional block diagram showing application management apparatus 400 that realizes integrated application manager 308 on portable terminal 100.

Application management apparatus 400 is provided for portable terminal 100 and collectively manages a plurality of applications of different platforms for each application service to be executed by cooperation between these applications.

Application management apparatus 400 shown in FIG.3 includes service information acquiring section 402, service information analysis section 404, table updating section 405, table storage section 406, integrated application control section 408, application list storage section 410, application management section 412, service ID assigning section 414, operation section 101 and display section 102 or the like.

Here, the service information (meta data) is information that describes application names (application identification information (identifiers)) required for each service and associates a service ID designating the service with the types and versions or the like of applications necessary to execute the service.

Service information acquiring section 402, service information analysis section 404, table updating section 405, integrated application control section 408, application management section 412 and service ID assigning section 414 are included in integrated application management control section 415 made up of CPU 120, RAM section 105, ROM section 104 or the like shown in FIG.1. Integrated application management control section 415 may also be comprised of CPU 203, RAM section 205 and ROM section 204 in addition to CPU 120, RAM section 105 and ROM section 104.

Furthermore, table storage section 406 and application list storage section 410 are comprised of RAM section 105 and memory section 106 or the like shown in FIG.1.

Service information acquiring section 402 is controlledbyintegratedapplicationcontrolsection408, acquires service information for each service provided by a service provider and outputs the service information to service information analysis section 404.

Service information acquiring section 402 can acquire service information in whatever way and, for example, may acquire the service information via communication section 103 of portable terminal 100 through downloading and so on.

Service information analysis section 404 is controlledbyintegratedapplicationcontrolsection408, analyzes the contents of service information inputted and outputs the contents of service information to table updating section 405.

To be more specific, the service information received as input from service information acquiring section 402 is analyzed by service information analysis section 404 and whether or not the analysis contents are already stored in portable terminal 100 is decided under the control of integrated application control section 408. The service information also including this decision result is outputted from service information analysis section 404 to table updating section 405.

When the service information received as input from service information acquiring section 402 is information designating the versions of applications used in the service of the already stored service information, changes or additions of applications themselves, service information analysis section 404 outputs the service information to table updating section 405 as service information to be updated.

Service information analysis section 404 outputs the acquired service information to table updating section 405 by also including information about a decision as to whether or not the service can be executed on portable terminal 100 itself made under the control of integrated application control section 408.

Table updating section 405 is controlled by integrated application control section 408, outputs the inputted and analyzed service information also including the decision information as to whether or not the service can be executed on portable terminal 100 to table storage section 406 as service information and thereby updates the table.

When updating the service information, table updating section 405 displays the fact of updating the service information about display section 102 under the control of integrated application control section 408.

Furthermore, when the user installs or has already installed a given application using operation section 101, communication section 103 or the like, table updating section 405 receives as input the application information acquired by integrated application control section 408.

Table storage section 406 updates or saves the service information received as input from table updating section 405 and stores, for each service, a service ID designating the service in association with applications used for the service. The service information in table storage section 406 is not only updated by table updating section 405 but also can be freely read/written by integrated application control section 408 and is updated/saved by integrated application control section 408. This table of service information stored in table storage section 406 is associated with reference to the service ID, and is therefore also referred to as "service ID table."

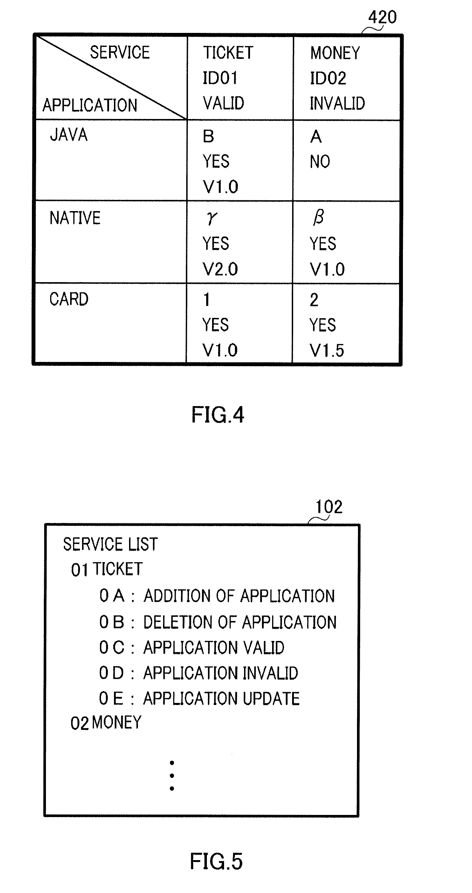

FIG. 4 shows an example of the table stored in table storage section 406.

As shown in FIG.4, table (also referred to as "service ID table") 420 stores a service provided in association with an application used for the service. To be more specific, table 420 stores, for each service, a service name, service ID designating the service and information as to whether or not the service can be executed on portable terminal 100.

Furthermore, table 420 associates each service ID designating the service with the type of application used, presence/absence of the application in portable terminal 100 and version of the application and so on. The presence/absence of the application is information designating whether or not the application is already installed in portable terminal 100.

For example, table 420 shown in FIG.4 stores "ticket" as a service, ID "01" identifying the service "ticket" together with "valid" information designating that this service can be executed on portable terminal 100.

In this table 420, each service is associated with application information about a non-dependent application such as Java (trademark), card application of the IC card and native application, which are applications used when the service is executed.

A plurality of applications used for a certain service have different platforms, and, to be more specific, the service is executed using a non-dependent application, native application and card application. The service may also be executed by a combination of only a native application and a card application.

The "ticket" service in table 420 shows non-dependent application name "Java (trademark) B" of Java (trademark) application, which is a non-dependent application in association with "Yes" designating that the Java (trademark) application is already installed and "V1.0" designating the version of the Java (trademark) application used for the "ticket" service.

Furthermore, the "ticket" service shows the Java (trademark) application in association with already installed native application "γ", version "V2.0," already installed card application "1" and version "1.0."

"γ" shows the type of native application and "Yes" shows that the application is already installed in portable terminal 100. Furthermore, "valid" designating whether or not a service can be executed shows that all applications available in the service are installed and can be executed on portable terminal 100.

Likewise, table 420 shown in FIG.4 stores "money" as the service together with service ID "02" identifying the service and information about "invalid" showing that the service can be executed on portable terminal 100.

The "money" service in table 420 is executed using non-installed Java (trademark) application "A," installed native application "β," version "V1.0" and installed card application "2" and version "V1.5." "invalid" designating whether or not the service can be executed shows that there are missing applications (here, non-installed Java application (trademark)) among applications used for the service and the service cannot be executed on portable terminal 100.

Integrated application control section 408 shown in FIG.3 controls each component connected, integrates a plurality of applications used for the same service and manages the applications for each service in order to execute the service provided to portable terminal 100.

To be more specific, integrated application control section 408 acquires service information via service information acquiring section 402, causes service information analysis section 404 to analyze the acquired service information and causes table storage section 406 to store the service information as a table via table updating section 405.

When the analysis contents of the acquired service information are analysis contents showing that the applications to execute the service of the service information are not stored in table storage section 406, integrated application control section 408 searches the applications in the list of installed applications of application list storage section 410.

That is, when the applications to execute the service of the acquired service information do not exist in table storage section 406, integrated application control section 408 decides, using application list storage section 410, whether or not the applications are already installed, used for another service, and so on. When the applications are already installed, used for another service, for example, integrated application control section 408 updates the table via table updating section 405.

Furthermore, integrated application control section 408 controls the sections according to input from operation section 101. Integrated application control section 408 controls application management section 412 using the table (here, table 420) of table storage section 406 and manages the applications used to execute the service.

Furthermore, integrated application control section 408 stores the applications installed on portable terminal 100 also including applications installed using operation section 101 and communication section 103 of portable terminal 100 in application list storage section 410 as the list.

Furthermore, integrated application control section 408 displays the service information about display section 102 using the table (here, table 420) of table storage section 406. When there is an input corresponding to the contents displayed via operation section 101, integrated application control section 408 reads the service corresponding to the display contents from table storage section 406, checks applications necessary for the execution and executes all the applications necessary for the execution via application management section 412.

For example, upon receiving a command to display a service list from the input section, integrated application control section 408 reads the service information from table storage section 406 and displays the service information about display section 102.

FIG.5 shows a service list displayed on display section 102 as an example of the user interface by integrated application control section 408.

As shown in FIG.5, display section 102 displays command information that can be inputted as a service list such as "addition of application," "deletion of application," "application valid," "application invalid" and "application update" for each type of the service provided (e.g. in FIG.5, "ticket" designating an electronic ticket service, "money" and so on). This display is performed by an OS standard launcher of portable terminal 100.

When the commands displayed are inputted in integrated application control section 408 via operation section 101, integrated application control section 408 executes processing corresponding to the display contents via application management section 412.

Furthermore, integrated application control section 408 has the function of allowing the user to generate a service independently. For example, integrated application control section 408 causes display section 102 to display the applications stored in application list storage section 410 (applications installed in portable terminal 100) and allows the user to select a plurality of applications used to execute the service via operation section 101. When a plurality of applications are selected by operation section 101, integrated application control section 408 generates a service to be executed by cooperation between the selected applications and outputs the identification information about the selected applications (e.g., application names) and information designating the generated service to service ID assigning section 414.

Application list storage section 410 is intended to store the types of applications installed in portable terminal 100, that is, already acquired applications and application integrated control section 408 reads/writes the information designating the types. Here, the applications stored in application list storage section 410 may be stored in whatever way. For example, the applications may also be acquired from other apparatuses connected via a radio network by portable terminal 100 through the user's operation via communication section 103. Furthermore, the configuration of portable terminal 100maybe such that a storage medium is detachable and the applications are stored in application list storage section 410 via this storage medium.

Upon receiving a service under the control of integrated application control section 408, application management section 412 manages applications used to execute the service and adds, deletes and updates applications, and so on. Application management section 412 is intended to manage applications on portable terminal 100 irrespective of the type of platform and the applications managed are stored in memory section 106 and cardmemory 206 or the like as application programs.

Here, application management section 412 manages non-dependent type applications such as Java (trademark) applications, native applications which are dependent type applications and card applications which are applications in a card individually, and adds, deletes and updates the applications.

When a service executed by cooperation between a plurality of applications selected via operation section 101 is independently generated, that is, set via integrated application control section 408, service ID assigning section 414 assigns a service ID to the service generated.

Furthermore, service ID assigning section 414 stores the assigned service ID in association with a plurality of application names designating the plurality of selected applications in table storage section 406 as service information via integrated application control section 408.

Next, operations of application management apparatus 400 will be explained.

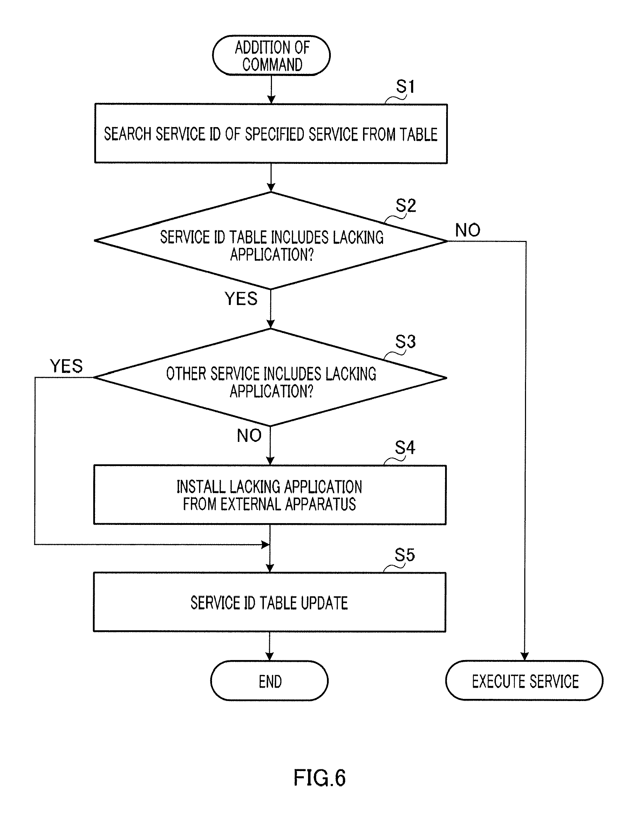

FIG.6 is a flowchart illustrating the operation of adding a service provided by the application management apparatus according to the present invention.

First, application management apparatus 400 in portable terminal 100 first acquires service information about the service provided (service ID, application name, version necessary to execute the service) and stores the service information in table storage section 406. Suppose this service information is acquired from the server via communication section 103 (see FIG.1) here. The service information may also be acquired from a reader/writer that can communicate with contactless IC card 200 in a contactless manner via antenna section 202 of contactless IC card 200 in FIG. 1 and stored in table storage section 406.

When a service specified to be added is inputted via operation section 101, integrated application control section 408 searches the service ID designating the specified service from table storage section 406 in step S1 and moves to step S2.

In step S2, integrated application control section 408 decides whether or not there is any application that is missing (also referred to as "missing application") among applications executed with the specified service ID in table storage section 406.

That is, in step S2, integrated application control section 408 checks table 420 (service ID table), assumes that the applications that execute the service designated by the service ID are installed in portable terminal 100 and decides whether or not the applications are stored in table storage section 406.

In this step S2, integrated application control section 408 moves to step S3 when there is a missing application, that is, the missing application is registered with table storage section 406, or executes the service using the applications used for the specified service via application management section 412 when there is no missing application, that is, when no missing application is registered with table storage section 406.

In step S3, integrated application control section 408 reads the information about application list storage section 410, decides whether or not there is any missing application as the application used for another service and moves to step S4 when there is no missing application or moves to step S5 when there is a missing application.

To be more specific, in this step S3, integrated application control section 408 installs, when any missing application is registered with application list storage section 410, the missing application in portable terminal 100 and decides that the missing application is used for another service on portable terminal 100. Furthermore, when no missing application is registered with application list storage section 410, integrated application control section 408 decides that no missing application is installed in portable terminal 100 nor used for the other service on portable terminal 100.

In step S4, integrated application control section 408 installs the missing application from an external apparatus such as server 300 (see FIG.1) and reader/writer 350 (see FIG. 1) via communication section 103 and antenna section 202 and moves to step S5.

More specifically, in step S4, portable terminal 100 installs the missing application from the server via communication section 103 or installs from the reader/writer via antenna section 202. When portable terminal 100 is configured to be able to mount a storage medium that stores the missing application, the missing application of the storage medium mounted may also be used. Here, the missing application installed is stored in memory section 106 and managed by application management section 412.

In step S5, integrated application control section 408 associates the acquired missing application with a service ID of the service which has been missing the missing application via table updating section 405, updates the table of the service information about table storage section 406 and ends the processing.

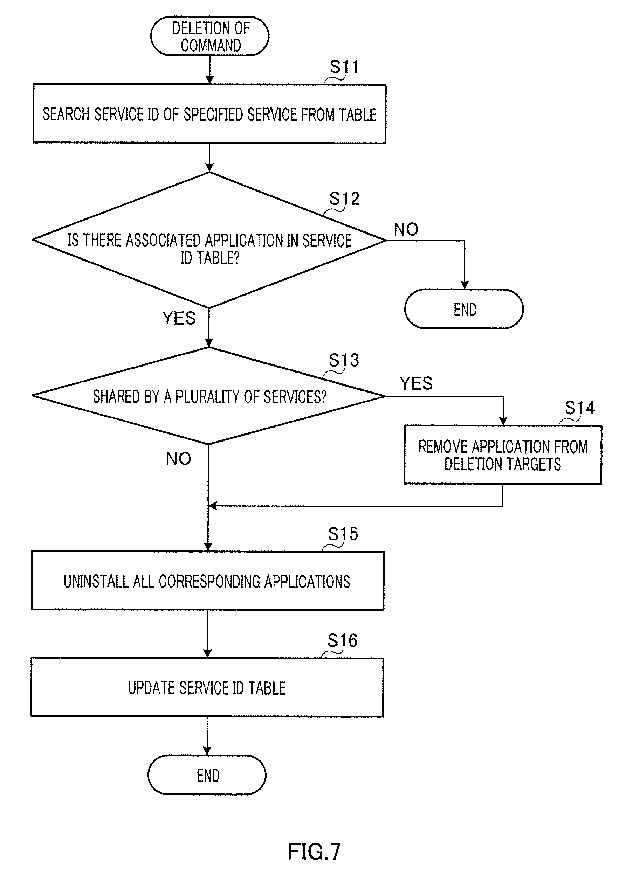

FIG.7 is a flowchart illustrating the operation of deleting the service provided in application management apparatus 400 according to the present invention.

When a service specified to be deleted is inputted in integrated application management control section 415 via operation section 101, integrated application control section 408 searches a service ID designating the specified service from table storage section 406 in step S11 and moves to step S12.

In step S12, integrated application control section 408 decides whether or not the application associated with the service ID of the specified service exists in the table (service ID table) of table storage section 406.

In step S12, when the application associated with the service ID of the specified service exists, integrated application control section 408 moves to step S13 or ends the processing when the application does not exist.

In step S13, integrated application control section 408 decides whether or not the application associated with the service ID is shared by a plurality of services, moves to step S14 when shared or moves to step S15 when not shared.

That is, in step S13, integrated application control section 408 searches whether or not the application associated with the specified service ID is registered as an application when the other service is executed and decides sharing or not sharing of the application based on the search result.

In step S14, integrated application control section 408 exempts the application associated with the service ID of the service to be deleted from the deletion and moves to step S15.

In step S15, integrated application control section 408 uninstalls all the corresponding applications via application management section 412 and moves to step S16.

In step S16, integrated application control section 408 deletes the service information to be deleted via table updating section 405 from table storage section 406 using the service ID designating the service information and updates the service information.

In this way, application management apparatus 400 can collectively manage applications on different platforms for each service by using service information (i.e. metadata of the service) provided for each service. In other words, application management apparatus 400 can collectively manage the layers of the non-dependent application (Java (trademark) application), native application and card application shown in FIG.2 using the service ID.

In this way, portable terminal 100 having the application management apparatus can collectively install, uninstall, activate or inactivate a group of applications for the same service.

Furthermore, when applications are not installed through the processing by application management apparatus 400 but manually installed by the user, integrated application control section 408 checks the names of the applications installed and updates the table.

Furthermore, when applications are manually uninstalled by portable terminal 100 via, for example, operation section 101, integrated application control section 408 checks the names of the uninstalled applications and reads the associated applications from the table of table storage section 406. Integrated application control section 408 then causes display section 102 to provide a display to prompt the user to determine whether or not to delete the read applications together.

Furthermore, according to portable terminal 100, when update information about the installed applications is obtained from server 300 (see FIG. 1) or reader/writer 350 (see FIG. 1), it is possible to also check update information about other applications of the same service through application management apparatus 400 and update all applications of the same service if necessary.

The acquired service information is registered with the table of table storage section 406 and the table of table storage section 406 is updated if there is any installed application.

Furthermore, with portable terminal 100 having application management apparatus 400, the user can newly generate service information by selecting a plurality of applications and giving a service ID independently.

That is, when portable terminal 100 having application management apparatus 400 is used to execute an independent service, the user is allowed to select a plurality of applications to be used for the service from applications managed by application management section 412 via operation section 101. Suppose the applications managed by application management section 412 are applications already installed in portable terminal 100 and IC card 200.

When information about the plurality of selected applications is inputted in integrated application control section 408 via operation section 101, a service to be executed by the plurality of selected applications is generated and service ID assigning section 414 assigns a service ID to the service.

With this service ID assigned by service ID assigning section 414, service information associated with application names (application identification information) designating the plurality of applications is generated.

This service information is stored in table storage section 406 via integrated application control section 408 and when the service designated by the stored service information is executed, integrated application control section 408 reads the corresponding service information from table storage section 406 and executes the service.

Here, although cases have been described with the embodiments above where the present invention is configured by hardware, the present invention may be implemented by software. For example, it is possible to implement functions similar to those of the application apparatus according to the present invention by writing an algorithm of the application management method according to the present invention in a programming language, storing this program in a memory and causing an information processing section to execute the program.

Furthermore, a case has been described in the present embodiment where application management section 412 is a single unit. However, when the present invention is implemented with the change to the existing architecture suppressed to a minimum, integrated application control section 408 may be adapted so as to exercise control over a plurality of existing application management sections for each type of application.

Furthermore, since the application management apparatus according to the present invention can be mounted on a portable terminal supporting an IC function that allows a contact IC card, contactless IC card or the like to be mounted, it is possible to provide an application management system having operations and effects similar to those described above.

### Industrial Applicability

The application management apparatus and application management method according to the present invention provide an advantage of collectively managing applications on a portable terminal mounted with an IC card even when these applications are based on different platforms such as card application, native application and non-native application on the terminal side using the same service, and is useful for mobile phones supporting IC functions.

## Claims

1. An application management apparatus that manages a plurality of applications used for a service using an integrated circuit function of an integrated circuit card that is mounted, the apparatus comprising:
a storage section that stores a plurality of pieces of application identification information indicating the plurality of applications respectively in association with a service identity indicating the service executed by cooperation between the plurality of applications; and
a management section that collectively manages the plurality of applications used for each service indicated by the service identity using the stored service identity and the plurality of pieces of application identification information associated with the service identity.

2. The application management apparatus according to claim 1, wherein the plurality of applications are executed on different platforms.

3. The application management apparatus according to claim 1, wherein the plurality of applications comprise card applications of the integrated circuit card and native applications which are stored in the apparatus and which are dependent on a platform specific to the apparatus.

4. The application management apparatus according to claim 1, wherein the plurality of applications comprise card applications of the integrated circuit card, native applications which are stored in the apparatus and which are dependent on a platform specific to the apparatus and non-native applications which are stored in the apparatus and which are not dependent on a platform specific to the apparatus.

5. An application management apparatus comprising a command section that commands deletion of a service stored in the storage section and storage of the service in the storage section, wherein:
the management section collectively deletes, upon receiving a command of deletion of the service from the command section, applications corresponding to all application identification information related to a service identity of the service subject to the command stored in the storage section and collectively adds, upon receiving a command of storage of the service from the command section, the plurality of applications used in the service to be stored which is subject to the storage command.

6. The application management apparatus according to claim 5, wherein the management section removes, when all applications related to the service identity of the service which is subject to the deletion command are collectively deleted, the applications used in another service from the plurality of applications subject to collective deletion in the case where the applications subject to the collective deletion are shared with the other service.

7. The application management apparatus according to claim 5, further comprising an application list storage section that stores applications executable in the apparatus as a list, wherein:
upon receiving a storage command of the service from the command section and collectively adding a plurality of applications used in the service to be stored which is subject to a storage command, the management section removes, when the applications subject to the collective addition are stored in the application list storage section, applications stored in the application list storage section from the plurality of applications subject to the collective addition.

8. The application management apparatus according to claim 1, further comprising:
a selection section that allows a user to select the plurality of applications; and
a service identity assigning section that assigns a service identity to a service executed by cooperation between the plurality of selected applications and causes the storage section to store the service identity in association with a plurality of pieces of application identification information indicating the plurality of selected applications respectively.

9. An application management method for managing a plurality of applications used in a service using an integrated circuit function of an integrated circuit card mounted, comprising:
a storing step of storing a plurality of pieces of application identification information indicating the plurality of applications respectively in association with a service identity indicating the service executed by cooperation between the plurality of applications; and
a managing step of managing the plurality of applications used for each service indicated by the service identity using the stored service identity and the plurality of pieces of application identification information associated with the service identity.

10. An application management apparatus comprising a service information acquiring section that acquires service information which is meta data including application identification information and an application version corresponding to the service identity from an external apparatus, wherein:
the storage section stores the acquired service information as a service identity and the plurality of pieces of application identification information associated with the service identity.

## Amended claims

### Amended claims under Art. 19.1 PCT

**1.** (Amended) An application management apparatus that manages card applications and in-apparatus applications used for services using functions of an integrated circuit card, the card applications being stored in the integrated circuit card that is mounted, the in-apparatus applications being stored in the application management apparatus, the application management apparatus comprising:
a storage section that stores application identification information in association with service identities, the application identification information individually designating each card application and in-apparatus application, the service identities individually designating each service executed by cooperation between the card applications and in-apparatus applications; and
a management section that collectively manages the card applications and in-apparatus applications used for the services designated by the service identities, using the stored service identities and the application identification information associated with the service identities.

**2.** (Amended) The application management apparatus according to claim 1, wherein the in-apparatus applications comprise a native application that is dependent on a platform specific to the application management apparatus.

**3.** (Amended) The application management apparatus according to claim 1, wherein the in-apparatus applications comprise a native application that is dependent on a platform specific to the application management apparatus and a non-native application that is not dependent on the platform specific to the application management apparatus.

**4.** (Amended) The application management apparatus according to claim 1, further comprising a command section that commands storing and deleting services from and in the storage section,
wherein, upon receiving a command to delete a service from the command section, the management section collectively deletes the card applications and in-apparatus applications associated with the application identification information related to a service identity of the service stored in the storage section and subject to the deletion command, and, upon receiving a command to store a service from the command section, collectively adds the card applications and in-apparatus applications used for the service subject to the storage command.

**5.** (Amended) The application management apparatus according to claim 4, wherein, upon deleting the card applications and in-apparatus applications related to the service identity of the service subject to the deletion command, the management section exempts card applications and in-apparatus applications shared between the service subject to the deletion command and another service, from the deletion.

**6.** (Amended) The application management apparatus according to claim 4, further comprising an application list storage section that stores a list of card applications and in-apparatus applications that can be executed on the apparatus,
wherein, upon receiving the command to store the service from the command section and collectively adding the card applications and in-apparatus applications used for the service subject to the storage command, the management section exempts card applications and in-apparatus applications stored in the application list storage section, from the storage.

**7.** (Amended) The application management apparatus according to claim 1, further comprising:
a selection section that allows a user to select the card applications and in-apparatus applications; and
a service identity assigning section that assigns the service identities to the services executed by cooperation between the card applications and in-apparatus applications, and stores the service identities in association with the application identification information individually designating each selected card application and in-apparatus application.

**8.** (Amended) An application management method for managing card applications and in-apparatus applications used for services using functions of an integrated circuit card, the card applications being stored in the integrated circuit card that is mounted, the in-apparatus applications being stored in an apparatus adopting the application management method, the method comprising:
storing application identification information in association with service identities, the application identification information individually designating each card application and in-apparatus application, the service identities individually designating each service executed by cooperation between the card applications and in-apparatus applications; and
collectively managing the card applications and in-apparatus applications used for the services designated by the service identities, using the stored service identities and the application identification information associated with the service identities.

**9.** (Amended) The application management apparatus according to claim 1, further comprising a service information acquiring section that acquires service information including the application identification information and application versions associated with the service identities, from an external apparatus,
wherein the storage section stores the acquired service information as the service identities and application identification information associated with the service identities.

**10.** (Deleted)
